Europäisches Patentamt

European Patent Office

Office européen des brevets

(11) Veröffentlichungsnummer: **0 408 864 A1**

## (12) EUROPÄISCHE PATENTANMELDUNG

(21) Anmeldenummer: **90109770.9**

(22) Anmeldetag: **23.05.90**

(51) Int. Cl.5: **F16H 37/06, B29C 47/08**

(30) Priorität: **15.07.89 DE 3923431**

(43) Veröffentlichungstag der Anmeldung:
**23.01.91 Patentblatt 91/04**

(84) Benannte Vertragsstaaten:
**AT DE FR IT NL**

(71) Anmelder: **Battenfeld Extrusionstechnik GmbH**
**Königstrasse 45**
**D-4970 Bad Oeynhausen(DE)**

(72) Erfinder: **Wittmann, Zbigniew Dipl.-Ing.**
**Jupiterweg 6**
**D-3400 Güttingen(DE)**

(74) Vertreter: **Müller, Gerd et al**
**Patentanwälte**
**HEMMERICH-MÜLLER-GROSSE-POLLMEIER--**
**MEY Hammerstrasse 2**
**D-5900 Siegen 1(DE)**

(54) Getriebe für Doppelschnecken-Extruder.

(57) Es wird ein Getriebe für Doppelschnecken-Extruder beschrieben, bei welchem die beiden Abtriebswellen 6 und 7 über eine Verteilerstufe zueinander gegenläufig mit einer gemeinsamen Antriebswelle in Verbindung stehen, wobei Abtriebswellen 6 und 7 mit der Verteilerstufe durch ein Untersetzungsgetriebe 23 bzw. 24 verbunden sind, und wobei die beiden Abtriebswellen 6 und 7 vorzugsweise mit geringem Achsabstand parallel nebeneinanderliegend angeordnet sind.

Jedes Untersetzungsgetriebe 23 bzw. 24 weist ein Ringrad 25 bzw. 37 mit Außenverzahnung 31 bzw. 43 und Innenverzahnung 35 bzw. 47 auf, wobei die Außenverzahnung 31 bzw. 43 mit einem Ritzel der Verteilerstufe eine Stirnradstufe bildet. Jede Abtriebswelle 6 und 7 ist einerseits mit Achsfluchtlage durch das Ringrad 25 bzw. 37 seines Untersetzungsgetriebes 23 bzw. 24 sowie andererseits achsparallel, aber achsversetzt auch durch das Ringrad 37 bzw. 25 des anderen Untersetzungsgetriebes 24 bzw. 23 geführt. Die Ringräder 25 und 37 beider Untersetzungsgetriebe 23 und 24 liegen im Abstand hintereinander. Auf jeder Abtriebswelle 6 und 7 sitzt ein Ritzel 33 bzw. 45, das in mindestens ein mit der Innenverzahnung 35 bzw. 47 des zugehörigen Ringrades 25 bzw. 37 kämmendes Zwischenritzel 34 bzw. 46 ständig eingreift und jeweils die zu einer bestimmten Abtriebswelle 6 bzw. 7 gehörenden Ritzel 33 bzw. 45 und Zwischenritzel 34 bzw. 46 liegen dabei mit dem zugehörigen Ringrad 25 bzw. 37 in gleicher Ebene.

FIG. 4

## GETRIEBE FÜR DOPPELSCHNECKEN-EXTRUDER

Die Erfindung betrifft ein Getriebe für Doppelschnecken-Extruder, bei welchem die beiden Abtriebswellen über eine Verteilerstufe zueinander gegenläufig mit einer gemeinsamen Antriebswelle in Verbindung stehen, wobei jede Abtriebswelle mit der Verteilerstufe durch ein Untersetzungsgetriebe verbunden ist, und wobei die beiden Abtriebswellen - vorzugsweise mit geringem Achsabstand, z.B. zwischen 50 und 60 mm - parallel nebeneinanderliegend angeordnet sind.

Der Erfindung liegt die Aufgabe zugrunde, ein Getriebe dieser Gattung zu schaffen, welches neben dem Doppelschnecken-Extruder möglichst wenig Einbauraum benötigt und welches darüber hinaus mit einem möglichst geringen baulichen Aufwand erstellt werden kann.

Erreicht wird das gesteckte Ziel nach der Erfindung grundsätzlich dadurch, daß jedes Untersetzungsgetriebe ein Ringrad mit Außen- und Innenverzahnung aufweist, dessen Außenverzahnung mit einem Ritzel der Verteilerstufe eine Stirnradstufe bildet, daß jede Abtriebswelle einerseits mit Achsfluchtlage durch das Ringrad seines Untersetzungsgetriebes sowie andererseits achsparallel, aber achsversetzt auch durch das Ringrad des anderen Untersetzungsgetriebes geführt ist, daß die Ringräder beider Untersetzungsgetriebe im Ab stand hintereinanderliegen, daß auf jeder Abtriebswelle ein Ritzel sitzt, das in mindestens ein mit der Innenverzahnung des zugehörigen Ringrades kämmendes Zwischenritzel ständig eingreift, und daß dabei jeweils die zu einer bestimmten Abtriebswelle gehörenden Ritzel und Zwischenritzel mit dem zugehörigen Ringrad in gleicher Ebene liegen.

Durch die angegebenen Maßnahmen lassen sich die beiden Untersetzungsgetriebe innerhalb eines gemeinsamen Getriebegehäuses jeweils in kompakter Anordnung um beide Abtriebswellen herum sowie darüber hinaus auch dicht gestaffelt hintereinander anordnen, womit das gesamte Getriebe sich baulich relativ klein, aber trotzdem robust und funktionssicher auslegen läßt.

Besonders bewährt hat sich erfindungsgemäß eine Getriebe-Bauart, bei der die Ringräder beider Untersetzungsgetriebe jeweils von zwei konzentrisch ineinandersitzenden Ringkörpern gebildet sind, die lediglich durch Kuppelverzahnungen in drehfester, axialer Steckverbindung miteinander stehen, wobei nur der äußere Ringkörper in einer gehäusefesten Lagerung angeordnet ist, und wobei dieser äußere Ringkörper lediglich mit der Außenverzahnung versehen ist, während der innere Ringkörper lediglich die Innenverzahnung aufweist. Abgesehen davon, daß durch die zweigeteilte Ausbildung des Ringrades mit relativ geringem technischem Aufwand eine Anpassung der Untersetzungsgetriebe an unterschiedliche Bedürfnisse erleichtert wird, ergibt sich auch noch der Vorteil, daß bei der Durchführung von Wartungs- und Instandsetzungsarbeiten immer nur derjenige Ringkörper des Ringrades ausgetauscht bzw. ersetzt werden muß, welcher dem größten Verschleiß unterworfen war.

Als funktionswichtig hat es sich nach der Erfindung ferner erwiesen, daß mit der Innenverzahnung des inneren Ringkörpers jeweils mehrere, insbesondere drei, in Umfangsrichtung desselben gleichmäßig verteilt angeordnete Zwischenritzel kämmen, die sämtlich mit dem Ritzel der Abtriebswelle in Eingriff stehen. Durch diese Maßnahme wird nicht nur eine exakte Rotation des inneren Ringkörpers um die mit der Abtriebswelle fluchtende Längsachse sichergestellt, obwohl dieser innere Ringkörper keine eigene Lagerung aufweist. Es wird vielmehr auch der Einleitung radialer Kräfte in die Abtriebswelle entgegengewirkt und damit eine hohe Leistungsdichte an der Abtriebswelle erreicht.

Bewährt hat es sich im Rahmen der Erfindung, wenn sämtliche Zwischenritzel in gehäusefesten Lagern gehalten sind sowie durch den Abstandsbereich zwischen zwei Zwischenritzeln des einen Untersetzungsgetriebes jeweils die mit dem anderen Untersetzungsgetriebe gekuppelte Abtriebswelle durch den Innenring des Ringrades hindurchgeführt wird.

Des weiteren hat es sich nach der Erfindung aber auch bewährt, wenn die hinteren Enden beider Abtriebswellen jeweils durch Axialdrucklager, insbesondere Axial-Zylinderrollenlager oder Tandemlager, im Getriebegehäuse abgestützt sind, weil hierdurch die aus den beiden Extruderschnecken resultierenden Axialkräfte von den Abtriebswellen sicher aufgenommen werden können.

Der günstigen Kraftaufnahme aus den Extruderschnecken ist es aber auch dienlich, wenn nach der Erfindung das Getriebegehäuse einerseits durch eine Endplatte und andererseits durch eine Stirnplatte verschlossen ist, wobei Endplatte und Stirnplatte durch das Gehäuse-Mittelstück hindurch über Zuganker gekuppelt sind sowie die Endplatte die Axialdruck lager für die Abtriebswellen hält. Es wird auf diese Art und Weise erreicht, daß das Getriebegehäuse selbst von Axialkräften freigehalten ist, weil diese in die Endplatte eingehen.

Einer baulichen Vereinfachung des Getriebes ist es darüber hinaus nach der Erfindung besonders zuträglich, wenn die den beiden Abtriebswellen zugeordneten Untersetzungsgetriebe hinsichtlich der sie bildenden Getriebeglieder nahezu vollständig baugleich ausgeführt sind, wobei lediglich die beiden Abtriebswellen mit ihren Ritzeln eine unterschiedliche Ausführung haben, wenn Abtriebswellen und Ritzel baueinheitlich bzw. einstückig gefertigt sind. Bei in begrenztem Maße axial verschieblich mit den Abtriebswellen gekuppelten Ritzeln können sogar diese Ritzel und die beiden Abtriebswellen in baugleicher Ausführung Verwendung finden.

Die Erfindung sieht des weiteren vor, daß die Verteilerstufe aus zwei gleichen, lediglich der Drehrichtungsumkehr dienenden Ritzeln oder Stirnrädern besteht, von denen wenigstens eines auf seiner Welle mittels eines lösbaren Preßverbandes winkelverstellbar gehalten ist, damit nach erfolgter Montage eine genaue Einstellung ermöglicht wird.

Schließlich ist es nach der Erfindung aber auch von Vorteil, wenn die Antriebswelle mit der Eingangswelle der Verteilerstufe über eine schräg verzahnte Stirnrad-Untersetzungsstufe sowie ein Untersetzungs-Planetenradgetriebe in Verbindung steht, weil sich hierdurch ein günstiger Gesamtaufbau für das Getriebe erreichen läßt.

Anhand eines in der Zeichnung dargestellten Ausführungsbeispiels wird der Gegenstand der Erfindung nachfolgend ausführlich erläutert. Es zeigen

Figur 1 in schematisch vereinfachter Darstellung den Gesamtaufbau eines Getriebes für Doppelschnecken-Extruder,

Figur 2 den in Fig. 1 mit II gekennzeichneten, strichpunktiert eingegrenzten Bereich des Getriebes in ausführlicher Darstellung,

Figur 3 wiederum in ausführlicher Darstellung den in Fig. 1 der Zeichnung mit III gekennzeichneten und durch gestrichelte Linien eingegrenzten Bereich des Getriebes und

Figur 4 ebenfalls in ausführlicher Darstellung sowie enger baulich-funktioneller Zuordnung aller übrigen zum Getriebe nach Fig. 1 gehörenden Komponenten.

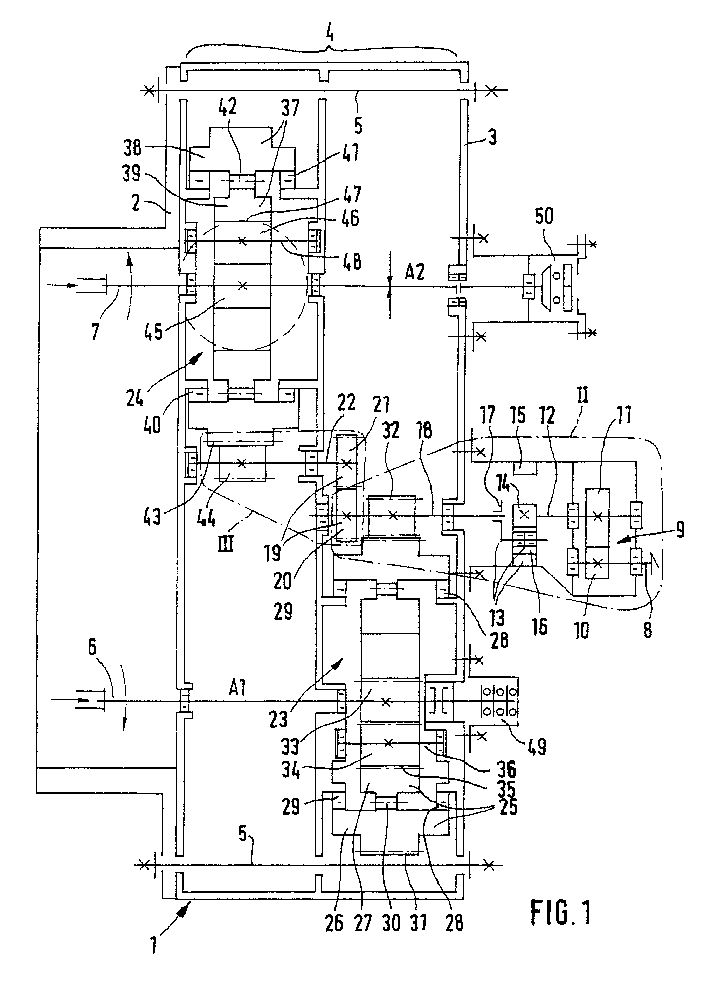

Das aus Fig. 1 der Zeichnung ersichtliche Getriebe für Doppelschnecken-Extruder ist in einem Getriebegehäuse 1 untergebracht, das eine mit dem Doppelschnecken-Extruder verbindbare Stirnplatte 2, eine dieser mit Abstand gegenüberliegende Endplatte 3 sowie ein dazwischen gelegenes Gehäuse-Mittelstück 4 umfaßt. Stirnplatte 2 und Endplatte 3 werden dabei, durch das Gehäuse-Mittelstück 4 hindurch, miteinander so verbunden, daß das Gehäuse-Mittelstück 4 von auftretenden Axialkräften freigehalten werden kann.

Aus Fig. 1 der Zeichnung ergibt sich weiterhin, daß das Getriebe für Doppelschnecken-Extruder zwei Abtriebswellen 6 und 7 aufweist sowie mit einer gemeinsamen Antriebswelle 8 für diese Abtriebswellen 6 und 7 versehen ist.

Die Antriebswelle 8 steht mit einer Stirnrad-Untersetzungsstufe 9 in Verbindung, deren Stirnräder 10 und 11 über Schrägverzahnungen zusammenarbeiten, und zwar auf einer Welle 12, welche die Eingangswelle eines Untersetzungs-Planetenradgetriebes 13 bildet. Letzteres hat ein von der Welle 12 angetriebenes Sonnenrad 14 und ein ortsfestes Hohlrad 15, wobei mit Sonnenrad 14 und Hohlrad 15 mindestens ein Planetenrad 16 kämmt, das wiederum an einem Planetenträger 17 sitzt.

Der Planetenträger 17 sitzt auf einer Welle 18, welche durch die Endplatte 3 in das Getriebegehäuse 1 hineingeführt ist und innerhalb desselben eine Verteilerstufe 19 mit zwei baugleichen Ritzeln oder Zahnrädern 20 und 21 antreibt. Die Verteilerstufe 19 soll dabei lediglich die Drehrichtung der das Ritzel bzw. Zahnrad 20 tragenden Welle an der das Ritzel bzw. Zahnrad 21 tragenden Welle 22 umkehren.

Die Welle 18 arbeitet auf ein Untersetzungsgetriebe 23 für die Abtriebswelle 6, während die Welle 22 ein Untersetzungsgetriebe 24 für die Abtriebswelle 7 antreibt.

Beide Untersetzungsgetriebe 23 und 24 sind baugleich ausgelegt, so daß sie die beiden Abtriebswellen 6 und 7 mit exakt gleichen Drehzahlen, jedoch mit zueinander entgegengesetzter Drehrichtung antreiben können.

Das Untersetzungsgetriebe 23 weist ein Ringrad 25 auf, das aus zwei konzentrisch ineinandersitzenden Ringkörpern 26 und 27, nämlich dem äußeren Ringkörper 26 und dem inneren Ringkörper 27, zusammengesetzt ist. Lediglich der äußere Ringkörper 26 ist dabei über Wälzlager 28 und 29 im Getriebege häuse 1 drehzentriert gehalten, während der innere Ringkörper 27 durch Kuppelverzahnungen 30 mit dem äußeren Ringkörper 26 in drehfester, axialer Steckverbindung steht.

Der äußere Ringkörper 26 ist mit einer Außenverzahnung 31 ausgestattet, die wiederum mit einem drehfest auf der Welle 18 angeordneten Ritzel 32 kämmt. Das Ringrad 25 bzw. dessen innerer Ringkörper 27 wird von der Abtriebswelle 6 koaxial durchsetzt, wobei sie wiederum ein Ritzel 33 drehfest trägt, welches wiederum mit einem Zwischenritzel 34 in Dauereingriff steht, das ständig mit einer Innenverzahnung 35 des inneren Ringkörpers 27 in Eingriff steht. Das Zwischenritzel 34 wird dabei durch eine Welle 36 im Getriebegehäuse gelagert.

Auch das Untersetzungsgetriebe 24 hat ein Ringrad 37 mit einem äußeren Ringkörper 38 und einem inneren Ringkörper 39, wobei wiederum allein der äußere Ringkörper 38 über Wälzlager 40 und 41 im Getriebegehäuse 1 ausgerichtet gelagert wird. Kuppelverzahnungen 42 halten die ständige Antriebsverbindung des inneren Ringkörpers 39 mit dem äußeren Ringkörper 38 aufrecht.

Über seine Außenverzahnung 43 steht das Ringrad 37 bzw. dessen äußerer Ringkörper 38 in ständigem Antriebseingriff mit einem Ritzel 44, welches wiederum drehfest auf die Welle 22 aufgekeilt ist.

In Achsfluchtlage mit dem Ringrad 37 bzw. mit dessen innerem Ringkörper 39 ist die Abtriebswelle 7 so im Getriebegehäuse 1 angeordnet, daß sie das Ringrad 37 durchsetzt. Drehfest mit ihr verbunden ist ein Ritzel 45, welches mit min destens einem Zwischenritzel 46 ständig kämmt, das wiederum Dauereingriff mit einer Innenverzahnung 47 hat, die sich am inneren Ringkörper 39 des Ringrades 37 befindet.

Das Zwischenritzel 46 lagert mit einer Welle 48 wiederum im Getriebegehäuse 1.

Aus Fig. 1 der Zeichnung und den vorstehend gegebenen Erläuterungen läßt sich ableiten, daß die zur Bildung der beiden Untersetzungsgetriebe 23 und 24 verwendeten Einzelelemente zumindest weitestgehend baugleich ausgeführt sind, so daß sie sich rationell und damit kostengünstig herstellen lassen.

Aus Fig. 1 der Zeichnung geht noch hervor, daß die hinteren Enden beider Abtriebswellen 6 und 7 jeweils durch Axialdrucklager gegen das Getriebegehäuse 1 abgestützt werden können. Das Axialdrucklager für die Abtriebswelle 6 ist dabei vorzugsweise als Axial-Zylinderrollenlager 49 ausgeführt, während am hinteren Ende der Abtriebswelle 7 statt dessen ein Tandemlager 50 angreift. Sowohl die vom Axial-Zylinderrollenlager 49 als auch die vom Tandemlager 50 aufgenommenen Axialkräfte werden von der Endplatte 3 aufgenommen und über die Zuganker 5 in die Stirnplatte 2 abgesetzt, so daß das Gehäuse-Mittelstück von diesen Axialkräften völlig entlastet ist.

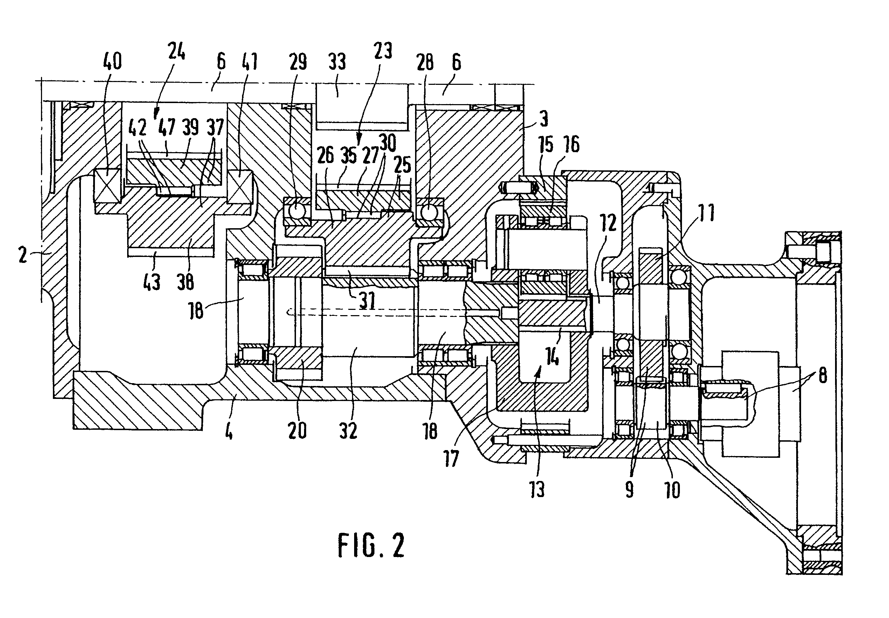

Während die schematische Darstellung der Fig. 1 den kinematischen Grundaufbau des Getriebes für Doppelschnecken-Extruder ohne weiteres erkennen läßt, ergeben sich besonders wichtige Wesensmerkmale desselben aber erst aus den konkreten Darstellungen in den Fig. 2 bis 4 der Zeichnung. So ist aus Fig. 2 im einzelnen nicht nur die Auslegung des Stirnrad-Untersetzungsgetriebes 9 ersichtlich, sondern es ergibt sich hieraus auch die Zuordnung des Untersetzungs-Planetengetriebes 13 zum Stirnrad-Untersetzungsgetriebe 9 sowie zu den benachbarten Funktionsteilen der Untersetzungsgetriebe 23 und 24.

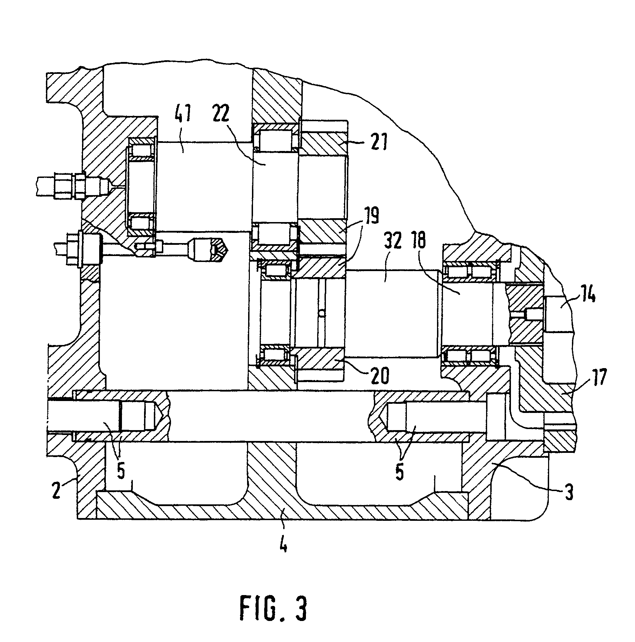

Der Fig. 3 der Zeichnung ist andererseits nicht nur die Zuordnung der Verteilerstufe 19 zu den benachbarten Funktionsteilen der Untersetzungsgetriebe 23 und 24 ersichtlich, sondern es wird dort auch die konkrete Ausgestaltung der die Stirnplatte 2 und die Endplatte 3 miteinander verbindenden sowie durch das Gehäuse-Mittelstück 4 hindurchgeführten Zuganker 5 dargestellt.

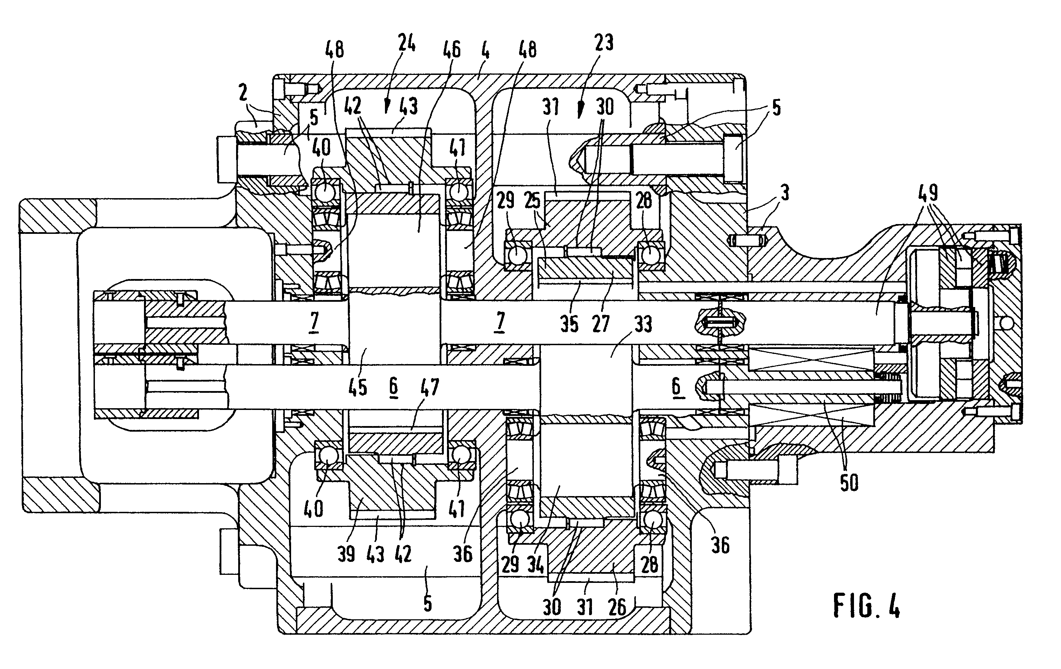

In Fig. 4 der Zeichnung sind schließlich besonders wichtige Wesensmerkmale des Getriebes für Doppelschnecken-Extruder gezeigt. Dort ist einerseits zu sehen, daß die beiden Abtriebswellen 6 und 7 mit nur geringem Achsabstand, der bspw. zwischen 50 und 60 mm betragen kann, parallel nebeneinanderliegend angeordnet sind.

Deutlich geht aus Fig. 4 der Zeichnung aber auch hervor, daß jede Abtriebswelle 6 bzw. 7 nicht nur mit Achsfluchtlage durch das Ringrad 25 bzw. 37 des ihr zugeordneten Untersetzungsgetriebes 23 bzw. 24 geführt ist, sondern darüber hinaus auch achsparallel, aber achsversetzt durch das Ringrad 37 bzw. 25 des jeweils anderen Untersetzungsgetriebes 24 bzw. 23 hindurchgeht. Diese jeweils beide Ringräder 25 bzw. 37 durchsetzende Anordnung beider Abtriebswellen 6 und 7 läßt sich natürlich nur verwirklichen, wenn die beiden Untersetzungsgetriebe 23 und 24 innerhalb des Getriebegehäuses 4 im Abstand hintereinanderliegend untergebracht sind, wie das ebenfalls durch Fig. 4 verdeutlicht wird.

Auch in Fig. 4 der Zeichnung ist im Zusammenhang mit den beiden Untersetzungsgetrieben 23 und 24 lediglich ein Zwischenritzel 34 bzw. 46 zu sehen, welches die Antriebsverbindung zwischen dem Ringrad 25 bzw. 37 und der Abtriebswelle 6 bzw. 7 über deren Ritzel 33 bzw. 45 herstellt. In der Praxis sind jedoch jedem der Untersetzungsgetriebe 23 bzw. 24 jeweils drei Zwischenritzel 34 bzw. 46 zugeordnet, und zwar mit in Umfangsrichtung gleichmäßig verteiler Anordnung. Jeweils durch einen Freiraum zwischen zwei benachbarten Zwischenritzeln 34 bzw. 46 ist dann die Abtriebswelle 7 bzw. 6 des anderen Untersetzungsgetriebes 24 bzw. 23 hindurchgeführt.

Mit Hilfe der drei in Umfangsrichtung gleichmäßig verteilt angeordneten Zwischenritzel 34 bzw. 46 wird der innere Ringkörper 27 bzw. 39 jedes Ringrades 25 bzw. 37 - ohne eigene Lagerung - so exakt zu dem auf der Abtriebswelle 6 bzw. 7 drehfest sitzenden Ritzel 33 bzw. 45 zentriert, daß keinerlei radiale Beanspruchungen auf die Abtriebswellen 6 und 7 einwirken können. Die von den Extruderschnecken her auf die beiden Abtriebswellen 6 und 7 einwirkenden Axialkräfte werden von den Axialdrucklagern, nämlich einerseits dem Axial-Zylinderrollenlager 49 und andererseits dem Tandemlager 50 aufgenommen, welche auch in Fig. 4 der Zeichnung zu sehen sind.

Aus Fig. 4 der Zeichnung ist, ebenso wie aus Fig. 1, ersichtlich, daß jeweils die zu einer bestimmten Abtriebswelle 6 oder 7 gehörenden Ritzel 33 und 45 sowie Zwischenritzel 34 und 46 mit dem zugehörigen Ringrad 25 bzw. 37 in gleicher Ebene liegen. Es ergibt sich auf diese Art und Weise für die beiden Untersetzungsgetriebe 23 und 24 jeweils nur eine relativ geringe Baubreite, welche wiederum die bauliche Abmessung des Getriebes insgesamt begünstigt.

Es sei abschließend noch darauf hingewiesen, daß zumindest eine der miteinander die Verteilerstufe 19 bildenden Ritzel oder Zahnräder 20 und 21 auf der zugehörigen Welle durch einen Preßverband gehalten werden kann, welcher noch nach der Montage eine genaue Einstellung beider Abtriebswellen 6 und 7 relativ zueinander ermöglicht. Dieser Preßverband kann bspw. dadurch hergestellt werden, daß bspw. das Zahnrad 20 erwärmt wird, so daß sich seine Nabe durch Dehnung aufweitet, während zugleich die zugehörige Welle 18 unterkühlt wird, womit sie entsprechend schrumpft. Die Teile lassen sich dann problemlos aufeinanderschieben und bilden nach anschließendem Wiedererreichen der Normaltemperaturen ganz selbsttätig den sicheren Preßverband. Ein Lösen des Preßverbandes kann durch Einpressen eines Gleitmittels, bspw. Glycerin, zwischen die Sitzflächen erreicht werden, wenn dieses Gleitmittel unter genügend hohem Druck zugeführt wird. In den Fig. 2 und 3 sind die Zuführkanäle für dieses Gleitmittel in der Welle 18 zu sehen.

**Ansprüche**

1. Getriebe für Doppelschnecken-Extruder, bei welchem die beiden Abtriebswellen über eine Verteilerstufe zueinander gegenläufig mit einer gemeinsamen Antriebswelle in Verbindung stehen, wobei jede Abtriebswelle mit der Verteilerstufe durch ein Untersetzungsgetriebe verbunden ist, und wobei die beiden Abtriebswellen - vorzugsweise mit geringem Achsabstand, z.B. zwischen 50 und 60 mm -parallel nebeneinanderliegend angeordnet sind,
**dadurch gekennzeichnet,**
daß jedes Untersetzungsgetriebe (23 bzw. 24) ein Ringrad (25 bzw. 37) mit Außenverzahnung (31 bzw. 43) und Innenverzahnung (35 bzw. 47) aufweist, dessen Außenverzahnung (31 bzw. 43) mit einem Ritzel (32, 44) der Verteilerstufe (19) eine Stirnradstufe (32/25 bzw. 44/37) bildet,
daß jede Abtriebswelle (6 bzw. 7) einerseits mit Achsfluchtlage durch das Ringrand (25 bzw. 37) seines Untersetzungsgetriebes (23 bzw. 24) sowie andererseits achsparallel, aber achsversetzt durch das Ringrad (37 bzw. 25) des anderen Untersetzungsgetriebes (24 bzw. 23) geführt ist,
daß die Ringräder (25 und 37) beider Untersetzungsgetriebe (23 und 24) im Abstand hintereinanderliegen,
daß auf jeder Abtriebswelle (6 bzw. 7) ein Ritzel (33 bzw. 45) sitzt, das in mindestens ein mit der Innenverzahnung (35 bzw. 47) des zugehörigen Ringrades (25 bzw. 37) kämmendes Zwischenritzel (34 bzw. 46) ständig eingreift,
und daß dabei jeweils die zu einer bestimmten Abtriebswelle (6 bzw. 7) gehörenden Ritzel (33 bzw. 45) und Zwischenritzel (34 bzw. 46) mit dem zugehörigen Ringrad (25 bzw. 37) in gleicher Ebene liegen.

2. Getriebe nach Anspruch 1,
**dadurch gekennzeichnet,**
daß die Ringräder (25 und 37) beider Untersetzungsgetriebe (23 und 24) jeweils von zwei konzentrisch ineinandersitzenden Ringkörpern (26 und 27 bzw. 38 und 39) gebildet sind, die lediglich durch Kuppelverzahnungen (30 bzw. 42) in drehfester, axialer Steckverbindung miteinander stehen, daß dabei nur der äußere Ringkörper (26 bzw. 38) in einer gehäusefesten Lagerung (28, 29 bzw. 40, 41) angeordnet ist,
und daß der äußere Ringkörper (26 bzw. 38) lediglich mit der Außenverzahnung (31 bzw. 43) und der innere Ringkörper (27 bzw. 39) lediglich mit der Innenverzahnung (35 bzw. 47) versehen ist.

3. Getriebe nach einem der Ansprüche 1 und 2,
**dadurch gekennzeichnet,**
daß mit der Innenverzahnung (35 bzw. 47) des inneren Ringkörpers (27 bzw. 39) jeweils mehrere, insbesondere drei, in Umfangsrichtung derselben gleichmäßig verteilt angeordnete Zwischenritzel (34 bzw. 46) kämmen, die sämtlich mit dem Ritzel (33 bzw. 45) der Abtriebswelle (6 bzw. 7) in Eingriff stehen.

4. Getriebe nach einem der Ansprüche 1 bis 3,
**dadurch gekennzeichnet,**
daß sämtliche Zwischenritzel (34 bzw. 46) in gehäusefesten Lagern gehalten sind (36 bzw. 48) und durch den Abstandsbereich zwischen zwei Zwischenritzeln (34 bzw. 46) des einen Untersetzungsgetriebes (23 bzw. 24) jeweils die mit dem anderen Untersetzungsgetriebe (24 bzw. 23) gekuppelte Abtriebswelle (7 bzw. 6) durch den inneren Ringkörper (27 bzw. 39) des Ringrades (25 bzw. 37) hindurchgeführt ist.

5. Getriebe nach einem der Ansprüche 1 bis 4,
**dadurch gekennzeichnet,**
daß die hinteren Enden beider Abtriebswellen (6 und 7) jeweils durch Axialdrucklager, insbesondere Axial-Zylinderrollenlager (49) oder Tandemlager (50), im Getriebegehäuse (1) abgestützt sind.

6. Getriebe nach einem der Ansprüche 1 bis 5,
**dadurch gekennzeichnet,**
daß das Getriebegehäuse (1) einerseits durch eine Endplatte (3) und andererseits durch eine Stirnplatte (2) verschlossen ist, wobei Endplatte (3) und Stirnplatte (2) durch das Gehäuse-Mittelstück (4) hindurch über Zuganker (5) gekuppelt sind sowie die Endplatte (3) die Axialdrucklager (Axial-Zylinderrollenlager 49 und Tandemlager 50) für die Abtriebswellen (6 und 7) hält.

7. Getriebe nach einem der Ansprüche 1 bis 6,
**dadurch gekennzeichnet,**
daß die den beiden Abtriebswellen (6 und 7) zugeordneten Untersetzungsgetriebe (23 und 24) hinsichtlich der sie bildenden Getriebeglieder nahezu vollständig baugleich ausgeführt sind, wobei lediglich die beiden Abtriebswellen (6 und 7) mit ihren Ritzeln (33 und 45) eine voneinander abweichende Ausbildung haben.

8. Getriebe nach einem der Ansprüche 1 bis 7,
**dadurch gekennzeichnet,**
daß die Verteilerstufe (19) aus zwei gleichen, lediglich der Drehrichtungsumkehr dienenden Ritzeln oder Stirnrädern (20 und 21) besteht, von denen wenigstens eines (20) auf seiner Welle (18) mittels eines lösbaren Preßverbandes winkelverstellbar gehalten ist.

9. Getriebe nach einem der Ansprüche 1 bis 8,
**dadurch gekennzeichnet,**
daß die Antriebswelle (8) mit der Eingangswelle (18) der Verteilerstufe (19) über eine schräg verzahnte Stirnrad-Untersetzungsstufe (9) sowie ein Untersetzungs-Planetenradgetriebe (13) in Verbindung steht.

FIG. 1

EP 0 408 864 A1

FIG. 2

8

FIG. 3

FIG. 4

EP 0 408 864 A1

Europäisches
Patentamt

**EUROPÄISCHER RECHERCHENBERICHT**

Nummer der Anmeldung

EP 90109770.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 3 824 875<br>(WILLERT)<br>* Gesamt *<br>-- | 1-9 | F 16 H 37/06<br>B 29 C 47/08 |
| A | US - A - 4 315 440<br>(CHSZANIECKI)<br>* Gesamt *<br>---- | 1-9 | |

RECHERCHIERTE
SACHGEBIETE (Int Cl⁵)

F 16 H 37/00
F 16 H 47/00

Der vorliegende Recherchenbericht wurde für alle Patentansprüche erstellt.

| Recherchenort | Abschlußdatum der Recherche | Prüfer |
|---|---|---|
| WIEN | 10-10-1990 | HEMMELMEIER |